Europäisches Patentamt

European Patent Office

Office européen des brevets

(11) Veröffentlichungsnummer: **0 243 675**
**B1**

(12) **EUROPÄISCHE PATENTSCHRIFT**

(45) Veröffentlichungstag der Patentschrift:
12.07.89

(51) Int. Cl.⁴: **F 16 L 55/04**, F 17 D 1/20, F 04 B 11/00

(21) Anmeldenummer: **87104358.4**

(22) Anmeldetag: **24.03.87**

(54) **Verfahren zur Pulsationsdämpfung bei Kolbenkompressoren.**

(30) Priorität: **02.05.86 DE 3614930**

(43) Veröffentlichungstag der Anmeldung:
**04.11.87 Patentblatt 87/45**

(45) Bekanntmachung des Hinweises auf die Patenterteilung:
**12.07.89 Patentblatt 89/28**

(84) Benannte Vertragsstaaten:
**AT BE CH DE ES FR GB GR IT LI LU NL SE**

(56) Entgegenhaltungen:
**DE-A-3 036 821**

(73) Patentinhaber: **Borsig GmbH, Berlinerstrasse 27- 37, D-1000 Berlin 27 (DE)**

(72) Erfinder: **Ehrich, Robert, Savingnyplatz 7-8, D-1000 Berlin 12 (DE)**
Erfinder: **De Haas, Peter, Dr., Schönower Strasse 6, D-1000 Berlin 37 (DE)**
Erfinder: **Joergensen, Reidar, Charlottenbrunnerstrasse 3, D-1000 Berlin 33 (DE)**

(74) Vertreter: **Müller, Jürgen, Dipl.- Ing., Deutsche Babcock AG Lizenz- und Patentabteilung Duisburger Strasse 375, D-4200 Oberhausen 1 (DE)**

## Beschreibung

Die Erfindung betrifft ein Verfahren zur Dämpfung der Pulsation bei Kolbenkompressoren mit den Merkmalen des Oberbegriffes des Anspruches 1.

Zum Schutz des Rohrleitungssystemes bei Kolbenkompressoranlagen vor Pulsation (Druckschwankung infolge der stoßweisen Förderung) sind Pufferbehälter bekannt, die ein genügend großes Volumen aufweisen und möglichst dicht an dem Zylinder des Kolbenkompressors angeordnet sind. Nicht vermeidbare Druckschwankungen durch Resonanzen werden durch Drosseleinrichtungen in der Saug- und/oder Druckleitung gedämpft. Die Wirkung der Drosseleinrichtung beruht auf der Erzeugung eines Druckverlustes, dessen Höhe von der Durchströmungsgeschwindigkeit des Fördermediums abhängt. Wird die Fördermenge des Kolbenkompressors reduziert, so läßt wegen der geringeren Strömungsgeschwindigkeit die Dämpfungswirkung nach. Der freie Querschnitt der Drosseleinrichtung muß für diesen Fall der Teillast ausgelegt werden, da die Anlage in diesem Lastbereich besonders gefährdet ist. Das hat aber zur Folge, daß der Druckverlust bei Vollast viel höher als erforderlich ist und daß dadurch der Wirkungsgrad verschlechtert wird.

Der Erfindung liegt die Aufgabe zugrunde, die Pulsation bei Kolbenkompressoren so zu dämpfen, daß die Pulsation einen vorgegebenen Wert bei gleichzeitig geringstmöglichem Druckverlust nicht überschreitet.

Diese Aufgabe wird bei einem gattungsgemäßen Verfahren durch die kennzeichnenden Merkmale des Patentanspruches 1 gelöst. Vorteilhafte Ausgestaltungen der Erfindung sind in den Unteransprüchen angegeben.

Durch die Veränderung des Drosselquerschnittes kann die Dämpfungswirkung den jeweils herrschenden Bedingungen angepaßt werden. Damit läßt sich die Dämpfung optimal einstellen, wobei die aus der Querschnittsverminderung resultierenden Druckverluste den gerade notwendigen Wert nicht übersteigen.

Mehrere Ausführungsbeispiele der Erfindung sind in der Zeichnung dargestellt und werden im folgenden näher erläutert.

Es zeigen:

Fig. 1 und 2 jeweils das Schaltschema einer Vorrichtung zur Durchführung der Erfindung,
Fig. 3 den Längsschnitt durch eine Vorrichtung gemäß der Erfindung und
Fig. 4 die Seitenansicht zu Fig. 3.

Ein Zylinder 1 eines Kolbenkompressors umschließt einen axial verschiebbaren Kolben 2. Der Zylinder 1 ist mit einem an eine Saugleitung angeschlossenen Ansaugstutzen 3 und einem Auslaßstutzen 4 versehen. An den Auslaßstutzen 4 ist ein Pufferbehälter 5 angeschlossen, an den eine Druckleitung 6 angeflanscht ist.

Hinter dem Pufferbehälter 5 ist in der Druckleitung 6 eine Drossel 7 eingesetzt. Der Querschnitt der Drossel 7 ist veränderbar. Zu diesem Zweck ist die Drossel 7 mit einem Stellantrieb 8 versehen. Die Drossel 7 kann sinngemäß auch auf der Saugseite des Kolbenkompressors angeordnet sein. Anstelle einer Drossel können auch mehrere vorgesehen werden.

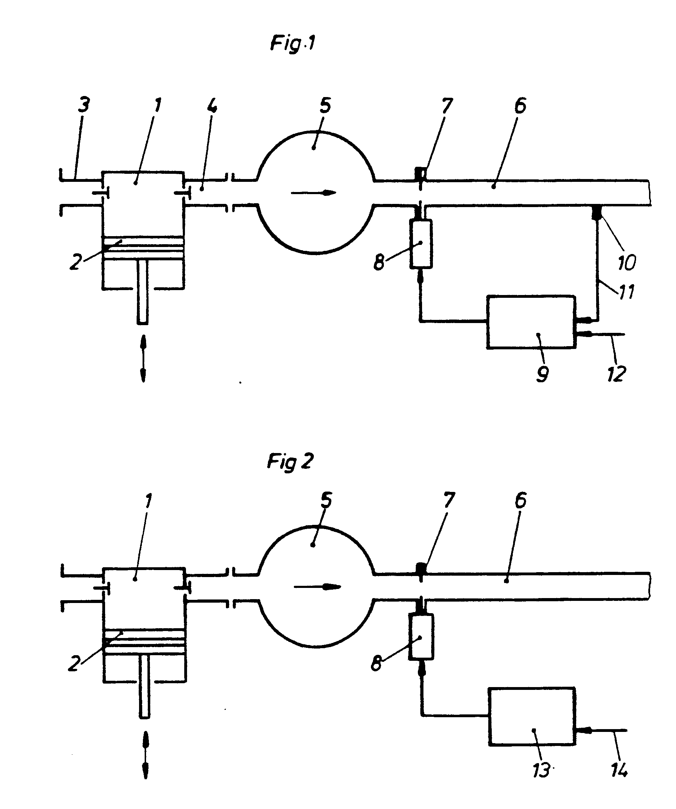

Gemäß der Fig. 1 ist der Stellantrieb 8 mit einem Regler 9 verbunden. Hinter der Drossel 7 ist in der Druckleitung 6 ein Druckmeßgerät 10 angeordnet. Von dem Druckmeßgerät 10 ist eine Meßleitung 11 zu dem Regler 9 geführt. In den Regler 9 ist ein Grenzwert 12 eingegeben, der den Wert der noch für zulässig erachteten Druckschwankung angibt. Der von dem Druckmeßgerät 10 gelieferte Meßwert wird in dem Regler 9 mit dem zuvor eingegebenen Grenzwert 12 verglichen. Ist die gemessene Druckschwankung größer als der Grenzwert, so verkleinert der Regler 9 über den Stellantrieb 8 den Querschnitt der Drossel so lange, bis der Grenzwert nicht mehr überschritten wird. Ist die gemessene Druckschwankung kleiner, so wird umgekehrt der Querschnitt vergrößert und damit der Druckverlust so lange verkleinert, bis der Grenzwert gerade noch nicht überschritten wird.

Gemäß der Fig. 2 wird die Druckschwankung nicht gemessen, und der Regler ist durch eine Steuerung 13 ersetzt. Die Steuerung 13 erhält von dem Kolbenkompressor ein Signal 14 über die Höhe des eingestellten Förderstromes. Aufgrund dieses Signales 14 verändert der Stellantrieb 8 über die in die Steuerung 13 eingegebene Abhängigkeit den Querschnitt der Drossel 7.

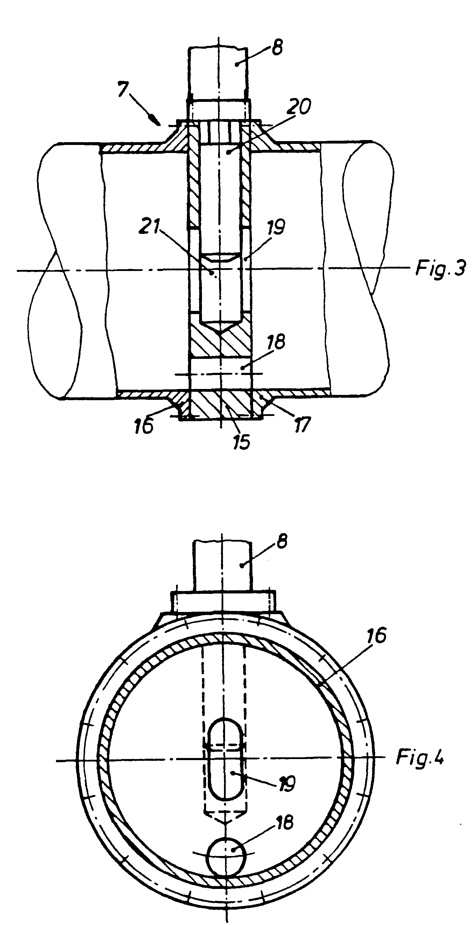

Die Drossel 7 besteht gemäß den Fig. 3 und 4 aus einer Scheibe 15, die zwischen den Flansch 16 des Pufferbehälters 5 und den Flansch 17 der Druckleitung 6 eingeschraubt ist. Die Scheibe 15 weist zwei axiale Öffnungen 18, 19 auf. Der Querschnitt der Öffnung 18 ist stets offen. Dieser Querschnitt ist so bemessen, daß bei maximalem Förderstrom der entstehende Druckstau weder den Zylinder 1 noch die Druckleitung 6 gefährdet. Die Öffnung 18 dient damit zur Sicherheit bei einem eventuellen Ausfall der Regelung oder der Steuerung.

Der Querschnitt der Öffnung 19 ist veränderbar. Zur Veränderung des freien Querschnittes der Öffnung 19 dient ein Stift 20, der in einer radialen Bohrung 21 der Scheibe 15 geführt ist, die die Öffnung 19 durchdringt. An den Stift 20 greift der Stellantrieb 8 an, der in den Fig. 3 und 4 nur angedeutet ist. Derartige Stellantriebe, die mechanisch, pneumatisch, hydraulisch oder elektrisch wirken können, sind an sich bekannt, so daß auf eine nähere Erläuterung verzichtet werden kann.

## Patentansprüche

1. Verfahren zur Dämpfung der Pulsation bei Kolbenkompressoren mit Hilfe einer oder mehrerer in der Druckleitung und/oder in der Saugleitung der Kolbenkompressoren angeordneter Drosseln, dadurch gekennzeichnet, daß in der Druckleitung und/oder in der Saugleitung der Druck stromab und/oder stromauf der Drossel gemessen und mit einem vorgegebenen Grenzwert verglichen wird und daß bei einem Überschreiten des Grenzwertes der Querschnitt der Drossel verkleinert wird, wobei unzulässige Druckschwankungen vermieden werden.

2. Verfahren nach Anspruch 1, dadurch gekennzeichnet, daß bei einem Unterschreiten des Grenzwertes der Querschnitt der Drossel vergrößert wird, bis gerade der Grenzwert nicht überschritten wird.

3. Verfahren zur Dämpfung der Pulsation bei Kolbenkompressoren mit Hilfe einer oder mehrerer in der Druckleitung und/oder in der Saugleitung der Kolbenkompressoren angeordneter Drosseln, dadurch gekennzeichnet, daß der Querschnitt der Drossel den Betriebszuständen des Kolbenkompressors oder den Prozeßdaten angepaßt und auf einen solchen Wert eingestellt wird, bei dem die Pulsation einen vorgegebenen Grenzwert nicht übersteigt.

4. Verfahren nach einem der Ansprüche 1 bis 3, dadurch gekennzeichnet, daß der Querschnitt der Drossel bis auf einen stets offenen Mindestquerschnitt dem gemessenen Druck bzw. den Betriebszuständen des Kolbenkompressors oder den Prozeßdaten angepaßt wird.

## Claims

1. Method for the damping of the pulsation in piston compressors with the aid of one or more throttles arranged in the pressure duct and/or in the suction duct of the piston compressors, characterised thereby, that the pressure in the pressure duct and/or in the suction duct is measured downstream and/or upstream of the throttle and compared with a preset limit value and that the cross-section of the throttle is reduced on the limit value being exceeded, whilst impermissible pressure fluctuations are avoided.

2. Method according to claim 1, characterised thereby, that the cross-section of the throttle is increased on the limit value being fallen below until the limit value is just not exceeded.

3. Method for the damping of the pulsation in piston compressors with the aid of one or more throttles arranged in the pressure duct and/or in the suction duct of the piston compressors, characterised thereby, that the cross-section of the throttle is matched to the operational states of the compressor or to the process data and set to such a value that the pulsation does not exceed a preset limit value.

4. Method according to one of the claims 1 to 3, characterised thereby, that the cross-section of the throttle is matched, as far as an always open minimum cross-section, either to the measured pressure or to the operational states of the compressor or to the process data.

## Revendications

1. Procédé d'amortissement de la pulsation dans les compresseurs à piston, à l'aide d'un ou plusieurs étranglements disposés dans la conduite de refoulement et/ou dans la conduite d'aspiration des compresseurs à piston, caractérisé en ce que la pression régnant en aval et/ou en amont de l'étranglement est mesurée dans la conduite de refoulement et/ou dans la conduite d'aspiration et comparée à une valeur limite prédéterminée et en ce qu'en cas de dépassement de la valeur limite, la section transversale de l'étranglement est réduite, ce qui fait que les oscillations de pression inadmissibles sont évitées.

2. Procédé selon la revendication 1, caractérisé en ce qu'en cas de passage au dessous de la valeur limite, la section transversale de l'étranglement est augmentée, exactement jusqu'à ce que la valeur limite ne soit pas dépassée.

3. Procédé d'amortissement de la pulsation pour les compresseurs à piston, à l'aide d'un ou plusieurs étranglements disposés dans la conduite de refoulement et/ou dans la conduite d'aspiration des compresseurs à piston, caractérisé en ce que la section transversale de l'étranglement est adaptée aux conditions de fonctionnement du compresseur à piston ou aux données du processus, et réglée à une valeur telle que, pour celle-ci, la pulsation ne dépasse par une valeur limite prédéterminée.

4. Procédé selon l'une des revendications 1 à 3, caractérisé en ce que la section transversale de l'étranglement est adaptée à la pression mesurée, ou aux conditions de fonctionnement du compresseur à piston ou aux données du processus, jusqu'à ce qu'on obtienne une section transversale minimale constant ouverte.

Fig.1

Fig 2

Fig. 3

Fig. 4

3